# EUROPEAN PATENT SPECIFICATION

(11) **EP 0 933 257 B1**
(45) Date of publication and mention of the grant of the patent: **17.12.2003**
(21) Application number: 99300648.5
(22) Date of filing: 28.01.1999
(51) Int. Cl.: B60R 1/06

(54) **Retention device for a rear view mirror**
Haltevorrichtung für einen Rückblickspiegel
Dispositif de retenue pour un rétroviseur

(30) Priority: 29.01.1998 BR 9800310
(43) Date of publication of application: 04.08.1999
(73) Proprietor: METAGAL INDUSTRIA E COMERCIO LTDA., Estado de Sao Paulo CEP:09990-090 (BR)
(72) Inventor: Moreno, Ricardo Poveda, Sao Bernardo do Campo, Est.de Sao Paulo (BR); Anze, Fabio Koiti, Sao Paulo-Capital, Estado de Sao Paulo (BR); Milani, Paulo Roberto, Sao Paulo-Capital, Estado de Sao Paulo (BR)
(74) Representative: Bankes, Stephen Charles Digby

(56) References cited:
- EP-A- 0 173 113
- EP-A- 0 472 454
- CH-A- 472 987
- DE-A- 1 814 545
- FR-A- 2 642 379
- US-A- 3 583 734
- US-A- 3 625 553

## Description

This invention relates to an external rear-view mirror for a vehicle such as an automobile.

Conventional rear-view mirrors, such as wing mirrors, comprise a casing which hou,ses the mirror itself, the casing being articulatedly mounted on one end of an arm the other end of which is secured to a base mounted on the side of the vehicle. The end of the arm remote from mirror casing typically comprises a shaft which is received in a sleeve formed integrally with the base and retained therein by a screw retainer or the like which also determines the amount of torque necessary to rotate the arm relative to the base. This retaining device normally retains the arm in a desired fixed position relative to the base.

In a conventional assembly, the retention device typically comprises a fitting the parts of which are provided in adjacent surfaces of the arm and the sleeve of the base, which engage when the shaft of the arm is slid axially into the sleeve, the parts being pressed into engagement by a spring and lock system. This type of construction can however be complex, depending on the characteristics of the mirror, which complicates the production process.

The conventional retention device is also vulnerable to forces resulting from the overall weight of the assembly and the movement of the vehicle. There is therefore a needed for a retention device for an external rear-view mirror which is of simplified construction, easy to manufacture and less subject to external stresses than conventional devices.

EP-A-0472454 (corresponding to the preamble of claim 1) discloses a wing mirror mounting wherein the mirror arm is attached to a shaft which is rotatably mounted in a base. The shaft has a widened axial portion with a diametric bore from the opposite ends of which protrude a pair of bearing balls urged apart by a compression spring in the bore between them. These balls engage resiliently in respective recesses in the base to hold the rotational position of the mirror.

The present invention consists in a retention device for an external rear-view mirror for a vehicle or the like, of the type comprising the features of claim 1.

Preferred embodiments of the present invention will now be described with reference to the accompanying drawings wherein:
FIG. 1 is a horizontal cross-section through a mounting assembly for an external rear-view mirror for a vehicle, in accordance with a first embodiment of the invention;
FIG. 2 is a partial horizontal cross-section illustrating a second embodiment, not covered by claim 1; and
FIG. 3 is a partial horizontal cross-section illustrating an alternative form of resilient projection, not covered by claim 1.

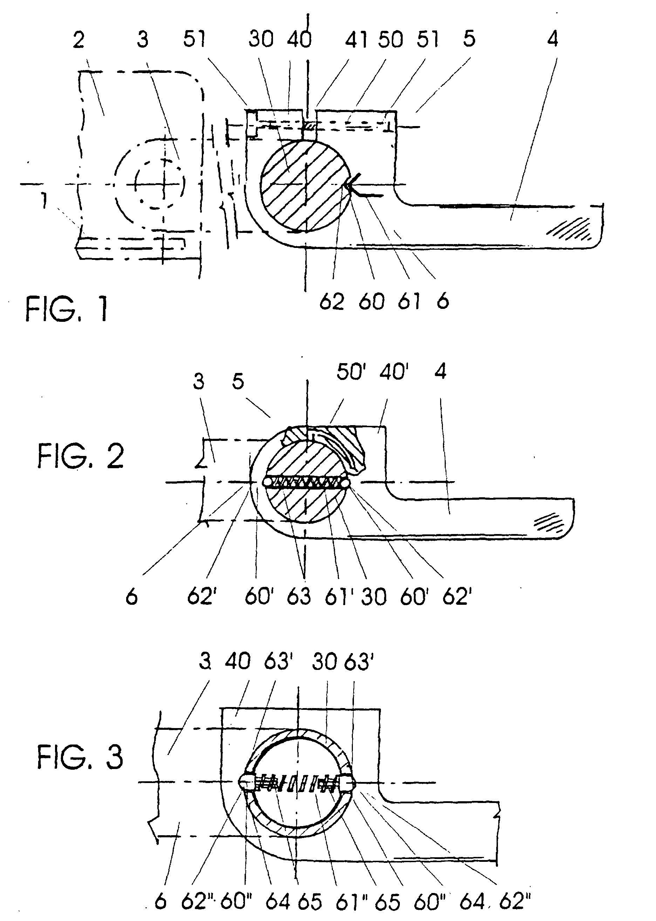

Referring first to Fig. 1, a rear-view mirror comprises a mirror 1 mounted within a housing 2 which in turn is articulatedly mounted on one end of an intermediate arm 3, on the other end of which is a shaft 30, extending substantially at right angles to the arm and received in a sleeve 40 integrally formed on a base 4 adapted to be mounted on the side of the vehicle.

The sleeve 40 is in the form of a split sleeve, with a vertical division 41 running parallel to the axis of the shaft. A torque adjusting mechanism generally indicated by 5 comprises one or more screws 50 passing through threaded or non-aligned bores 51 extending tangentially to the sleeve on opposite sides of the division 41, so that the screws bridge the division the width of which can be increased or reduced to loosen or tighten the grip of the sleeve around the shaft, thereby adjusting the torque required to rotate the shaft relative to the sleeve.

The shaft is normally retained against rotational axial movement in the sleeve by one or more resilient projections 61 projecting radially inwardly form the inner surface of the sleeve and having a tip 60 of V-shaped cross-section engaging in a corresponding recess or groove 62 in the surface of the shaft.

The resilient projection 60 is in the form of a laminated spring or leaf spring, bent to form a tip of V-shaped cross-section, the tip normally being resiliently biased in a direction radially towards the axis of the shaft, so that it engages in the recess of groove. The main body of the spring 61 is retained in a slot or a channel in the inner surface of the sleeve.

In a second embodiment illustrated in Figure 2, the recesses or grooves to receive the resilient projections are formed on the inner surface of the sleeve 40' rather than on the shaft 30, and the projections which engage in the recesses or grooves are in the form of steel balls lodged in the opposite ends of a transverse bore 63 formed diametrically through the shaft. The balls are urged radially outwardly away from one another by a compression spring 61', usually a helical spring, which is under slight compression at all times. In the desired angular position of the arm 3, the balls 60' are urged into respective recesses or grooves 62' formed diametrically opposite one another in the inner surface of the sleeve 40'

A third embodiment of the retention device is illustrated in Fig. 3, which does not show any additional gripping means as required by the invention. Here, the shaft 30 is tubular and does not have the diametrically extending bore of the embodiment of Fig. 2. Instead, a pair of opposed holes 63' are formed at diametrically opposite positions in the wall of the hollow shaft, each receiving a pin 60'' with a rounded head 64 projecting outwards from the surface of the shaft. The pins 60'' are received in respective opposite ends of a helical compression spring 61'' which acts in the same way as the embodiment of Figure 2, urging the two pins in radially opposed directions so that they can engage in respect recesses or grooves 62'' in the inner surface of the sleeve 40. The pins have elongated stems 65 extending rearwardly from their respective heads, to ensure that they are held straight within the helical spring and that the spring does not buckle.

In a further embodiment of the invention, with which the various different retention devices illustrated can be used, the base 4 can itself comprise the entire perimeter of the closed sleeve 40, receiving the shaft 30 of the arm 3.

To tighten the sleeve, the torque required to rotate the arm 3 may be determined by one or more resilient tongues 50' as illustrated in Figure 2, extending over a sector of the inside of the sleeve 40. As illustrated in Figure 2, the tongue 50' is integrally moulded with the sleeve, being fast with the inside of the sleeve at one of the end of the tongue and with a slight gap between the sleeve and the back of the tongue so that when the shaft is inserted in the sleeve the tongue is bent back slightly and bears resiliently against the surface of the shaft to determine the torque required to rotate the arm 3 relative to the base 4. Adjusting of torque is not possible.

There can thus be provided a mounting assembly for a vehicle external rear-view mirror which holds the mirror securely against stresses arising from its own weight and from the movement of the vehicle, which is simple to construct and assemble and retains the mirror firmly in its desired angular position.

## Claims

1. A retention device for an external rear-view mirror for a vehicle or the like, of the type comprising a mirror housing (2) enclosing a mirror plate (1), an intermediate element (3) on which the housing is articulatedly mounted, a base (4) adapted to be secured to a side of a vehicle and including a sleeve (40) which receives a shaft (30) said shaft (30) being retained in the sleeve (40) in a predetermined rotational position relative to the sleeve, by a retention device (6) comprising at least one retaining element (60) projecting resiliently from the inner surface of the sleeve (40) into a groove or recess (62) in the outer surface of the shaft (30), or from the outer surface of the shaft (30) into a recess or groove in the inner surface of the sleeve (40), **characterised in that** said intermediate element is an intermediate arm (3), that said shaft (30) extends from the opposite end of said arm (3) to that on which the mirror housing (2) is mounted, and **in that** a screw retainer device (5) is provided to adjust the grip of the sleeve (40) around the shaft (30) and thus the torque necessary to rotate the shaft (30) within the sleeve (40).

2. A retention device according to claim 1, **characterised in that** said retaining element is a projection (60) comprising a leaf spring or laminated spring (61) bent to form a V-shaped tip, the spring being mounted in a slot or channel in the inner surface of the sleeve with its tip projecting into a recess or groove (62) in the outer surface of the shaft.

3. A retention device according to claim 1 **characterised in that** the said projections comprise a pair of balls mounted at respective opposite ends of a bore formed diametrically through said shaft (30), a compression spring (61') mounted within said bore urging said balls radially away from one another and into respective recesses or grooves (62') in the inner surface of the sleeve.

4. A retention device according to claim 1 **characterised in that** the shaft (30) is tubular and has at least one pair of radial holes (63') through its wall at diametrically opposed positions therein, said projections comprising a pair of pins (60") projecting outwardly through said holes to respective recesses or grooves (62") in the inner surface of the sleeve, said pins being mounted at opposite ends of a compression spring (61") and urged in opposite directions through their respective holes in the shaft wall to be received in their respective grooves or recesses in the inner surface of the sleeve.

5. A retention device according to any preceding claim wherein said sleeve has a division (41) along one side thereof parallel to the sleeve axis, the sleeve being made of resilient material and a screw (50) or the like bridging said division and being received in a threaded bore (51) running substantially tangentially to the shaft, whereby said screw can increase or reduce the width of said slot to tighten or loosen the grip of the sleeve in the shaft.

## Patentansprüche

1. Haltevorrichtung für einen Außen-Rückspiegel für ein Fahrzeug oder dergleichen des Typs, der Folgendes umfasst: ein eine Spiegelscheibe (1) einschließendes Spiegelgehäuse (2), ein Zwischenelement (3), auf dem das Gehäuse gelenkig montiert ist, ein Unterteil (4), das zur Befestigung an einer Seite eines Fahrzeugs ausgeführt ist und eine Hülse (40) hat, die einen Schaft (30) aufnimmt, wobei der genannte Schaft (30) von einer Haltevorrichtung (6) in einer vorbestimmten Drehstellung relativ zur Hülse in der Hülse (40) gehalten wird, die wenigstens ein Halteelement (60) aufweist, das von der Innenseite der Hülse (40) federnd in eine Nut oder Ausnehmung (62) in der Außenseite des Schaftes (30) oder von der Außenseite des Schaftes (30) in eine Ausnehmung oder Nut in der Innenseite der Hülse (40) ragt, **dadurch gekennzeichnet, dass** das genannte Zwischenelement ein Zwischenarm (3) ist, dass der genannte Schaft (30) sich von dem entgegengesetzten Ende des genannten Arms (3) zu demjenigen erstreckt, an dem das Spiegelgehäuse (2) montiert ist, und dass eine Schraubhaltervorrichtung (5) zum Einstellen der Klemmung der Hülse (40) um den Schaft (30) und somit des zum Drehen des Schaftes (30) in der Hülse (40) notwendigen Drehmoments bereitgestellt ist.

2. Haltevorrichtung nach Anspruch 1, **dadurch gekennzeichnet, dass** das genannte Halteelement ein Vorsprung (60) ist, der eine Flachfeder oder eine Blattfeder (61) aufweist, die zu einer V-förmigen Spitze gebogen ist, wobei die Feder in einem Schlitz oder einer Nut in der Innenseite der Hülse montiert ist, wobei ihre Spitze in eine Ausnehmung oder Nut (62) in der Außenseite des Schaftes ragt.

3. Haltevorrichtung nach Anspruch 1, **dadurch gekennzeichnet, dass** die genannten Vorsprünge ein Paar Kugeln umfassen, die jeweils an entgegengesetzten Enden einer Bohrung montiert sind, die diametral durch den genannten Schaft (30) gebildet ist, wobei eine in der genannten Bohrung montierte Druckfeder (61') die genannten Kugeln radial auseinander und in betreffende Ausnehmungen oder Nuten (62') in der Innenseite der Hülse drückt.

4. Haltevorrichtung nach Anspruch 1, **dadurch gekennzeichnet, dass** der Schaft (30) röhrenförmig ist und an einander genau entgegengesetzten Stellen in seiner Wand wenigstens ein Paar radialer Löcher (63') durch sie hat, wobei die genannten Vorsprünge ein Paar Bolzen (60") aufweisen, die durch die genannten Löcher nach außen zu entsprechenden Ausnehmungen oder Nuten (62") in der Innenseite der Hülse vorspringen, wobei die genannten Bolzen an entgegengesetzten Enden einer Druckfeder (61") montiert sind und in entgegengesetzten Richtungen durch ihre betreffenden Löcher in der Schaftwand gedrückt werden, um in ihren betreffenden Nuten oder Ausnehmungen in der Innenseite der Hülse aufgenommen zu werden.

5. Haltevorrichtung nach einem der vorhergehenden Ansprüche, bei der die genannte Hülse entlang einer Seite von ihr, die parallel zur Hülsenachse ist, eine Teilung (41) hat, wobei die Hülse aus federndem Material hergestellt ist und eine Schraube (50) oder dergleichen die genannte Teilung überbrückt und in einer mit Gewinde versehenen Bohrung (51) aufgenommen wird, die im Wesentlichen tangential zum Schaft verläuft, wodurch die genannte Schraube die Breite des genannten Schlitzes vergrößern oder verkleinern kann, um die Einspannung der Hülse im Schaft zu verstärken oder zu lockern.

## Revendications

1. Un dispositif de retenue pour un rétroviseur extérieur, pour un véhicule ou machine semblable, du type qui comprend un logement de miroir (2) qui renferme une plaque formant miroir (1), un élément intermédiaire (3) sur lequel le logement est monté de façon articulée, une base (4) adaptée pour être fixée sur un côté d'un véhicule et qui comprend une gaine (40) qui reçoit une tige (30), ladite tige (30) étant retenue dans la gaine (40), en une position de rotation prédéterminée relativement à la gaine, par un dispositif de retenue (6) comprenant au moins un élément de maintien (60) qui fait saillie de façon résiliente depuis la surface intérieure de la gaine (40) dans un évidemment ou une rainure (62) dans la surface extérieure de la tige (30) ou depuis la surface extérieure de la tige (30) dans une rainure ou évidement dans la surface intérieure de la gaine (40), **caractérisé en ce que** ledit élément intermédiaire est un bras intermédiaire (3), **en ce que** ladite tige (30) s'étend depuis l'extrémité opposée dudit bras (3) jusqu'à celle sur laquelle est monté le logement de miroir (2), et **en ce qu'**un dispositif de maintien à écrou (5) est prévu pour ajuster le serrage de la gaine (40) autour de la tige (30), et dès lors le couple nécessaire pour faire tourner la tige (30) à l'intérieur de la gaine (40).

2. Un dispositif de retenue selon la revendication 1, **caractérisé en ce que** ledit élément de retenue est une saillie (60) comprenant un ressort à une ou plusieurs lames (61) recourbé pour former une pointe en forme de V, le ressort étant monté dans une fente ou encoche dans la surface intérieure de la gaine, sa pointe faisant saillie dans un évidement ou rainure (62) dans la surface extérieure de la tige.

3. Un dispositif de retenue selon la revendication 1, **caractérisé en ce que** lesdites saillies comprennent deux billes montées à des extrémités opposées d'un alésage formé diamétralement à travers ladite tige (30), un ressort de compression (61') monté à l'intérieur dudit alésage poussant radialement lesdites billes en les écartant l'une de l'autre jusque dans les rainures ou évidements respectifs (62') dans la surface intérieure de la gaine.

4. Un dispositif de retenue selon la revendication 1, **caractérisé en ce que** la tige (30) est tubulaire et possède au moins deux trous radiaux (63') à travers sa paroi, en des positions diamétralement opposées de celle-ci, lesdites saillies comprenant deux goujons (60") qui font saillie vers l'extérieur à travers lesdits trous jusqu'à des rainures ou évidements respectifs (62") dans la surface intérieure de la gaine, lesdits goujons étant montés à des extrémités opposées d'un ressort de compression (61") et poussés dans des directions opposées à travers leurs trous respectifs dans la paroi de la tige, pour être reçus dans leurs rainures ou évidements respectifs dans la surface intérieure de la gaine.

5. Un dispositif de retenue selon l'une quelconque des revendications précédentes, dans lequel ladite gaine est pourvue d'une division (41) le long de son côté qui est parallèle à l'axe de la gaine, la gaine étant réalisée en un matériau résilient, et une vis (50), ou élément semblable, qui relie les bords de ladite division et est reçue dans un alésage fileté (51) qui se prolonge sensiblement tangentiellement à la tige, de sorte que ladite vis peut augmenter ou réduire la largeur de ladite fente pour accroître ou diminuer le serrage de la gaine dans la tige.
